# EUROPÄISCHE PATENTANMELDUNG

(11) **EP 0 676 226 A1**
(43) Veröffentlichungstag der Anmeldung: **11.10.1995**
(21) Anmeldenummer: 94105447.0
(22) Anmeldetag: 08.04.1994
(51) Int. Cl.: B01D 33/333, E03F 5/14

(54) **Förderband-Filtereinrichtung**

(71) Anmelder: Frankenberger, Dieter, D-35415 Pohlheim (DE)
(72) Erfinder: Frankenberger, Dieter, D-35415 Pohlheim (DE)
(74) Vertreter: Missling, Arne, Dipl.-Ing.

(57) **Zusammenfassung**

Förderband-Filtereinrichtungen, sogenannte Paternoster-Filterrechen, die vor allem zur mechanischen Reinigung strömender Abwässer dienen, sollen durch die Erfindung in die Lage versetzt werden, außer dem normalen Filtergut auch gröbere Stücke aus dem Kanal zu entfernen, der von dem Abwasser durchflossen wird, ohne daß der zumeist steile Förderwinkel verändert werden müßte; dazu sind an den Filterelementen (21) des endlosen Filterbandes Filterrechen angebracht, die eine quer durch den Kanal reichende, waagerechte Hebefläche ausbilden, die gleichwohl von entsprechenden Abstreifeinrichtungen (7,16) sauber gehalten werden kann.

## Beschreibung

Die Erfindung betrifft eine Förderband-Filterinrichtung zur mechanischen Reinigung einer in einem Kanal oder dergleichen strömenden, mit Feststoffen verunreinigten Flüssigkeit, insbesondere eines Abwassers, mit einem endlosen Filterband aus miteinander verbundenen, jeweils um eine waagerechte Gelenkachse gegeneinander gelenkigen, flächigrechteckigen Filterelementen, je einem beiderseits des Filterbandes vorgesehenen, zu dessen Antrieb dienenden Kettentrieb aus jeweils mindestens einem Kettenrad und einer Vielzahl von Kettengliedern, die, jeweils um zwei voneinander beabstandete Umlenkelemente geführt und eine endlose Antriebskette bildend, beiderseits seitlich an den Filterelementen vorgesehen und an diesen befestigt sind, einem Rahmengestell für das Filterband, an dem die Umlenkelemente achsgelagert sind, wobei das Rahmengestell ein außerhalb des Kanals verbleibendes oberes Gestellteil aufweist, an dem mindestens ein Antriebsmotor befestigt ist, der mit mindestens einem der Kettenräder betriebsverbunden ist und in dessen Bereich das Filtergut aus dem Feststoff-Filter herausgeführt und ausgeworfen wird, wobei ferner ein unteres in den Kanal einführbares Gestellteil vorgesehen ist, um das aus der Flüssigkeit auszuscheidende Filtergut aufzunehmen, und wobei die zur Filterung dienenden Flächen der Filterelemente im filterungsaktiven Bereich sich im wesentlichen etwa senkrecht zu der Strömungsrichtung der zu filternden Flüssigkeit erstrecken.

Eine Förderband-Filtereinrichtung dieser Art ist aus der aus der Patentschrift EP 0 291 574 B1 bereits bekannt. Derartige Förderband-Filtereinrichtungen, sogenannte Paternoster-Filterrechen, dienen vor allem zur mechanischen Reinigung strömender Abwässer in entsprechenden Kanälen, wobei das Gestellunterteil des im Betrieb zumeist geneigt angeordneten Rahmengestells in einen derartigen Kanal eingeführt wird. Die Filterelemente werden von dem Abwasser durchströmt und tragen das Filtergut, welches die Filtersiebe nicht passieren kann, über das Gestelloberteil aus dem Kanal aus. Die Filterelemente sind in bezug auf Art, Umfang und Verteilung der Durchströmungsöffnungen je nach Anwendungszweck verschieden gestaltet; als besonders zweckmäßig haben sich alternierende Anordnungen herausgestellt.

Erhebliche Schwierigkeiten bei der Ausfilterung von Abwässern mittels einer solchen bekannten Förderband-Filtereinrichtung ergeben sich allerdings dann, wenn dem auszufilternden Filtergut gröbere Feststücke wie Steine, Hölzer oder dergleichen beigemengt sind, die von den das Filtergut fördernden Filterelementen abgleiten und in den Kanal zurückfallen oder die erst überhaupt nicht aufgenommen werden können. Sie verbleiben in dem Kanal und behindern die mechanische Reinigung in zunehmenden Maße, so daß sie fortwährend mit entsprechenden Hilfsmitteln entfernt werden müssen. Eine kontinuierliche Arbeitsweise der FörderbandFiltereinrichtung ist bei derart belasteten Abwässern nicht mehr gewährleistet; Ausfallzeiten und hoher Personalaufwand sind die unausweichliche Folge.

Die Erfindung hat sich deshalb die Aufgabe gestellt, eine Förderband-Filtereinrichtung der eingangs näher bezeichneten Art so einzurichten, daß die Filterung von strömenden, mit Feststoffen verunreinigten Flüssigkeiten durch mit den Flüssigkeiten mitgeführte oder in dem Kanal ruhend abgelagerte grobe Feststücke nicht behindert wird und diese Feststücke während des Betriebes der Förderband-Filtereinrichtung konstant mit dem übrigen, feinkörnigeren Filtergut ausgetragen werden.

Erfindungsgemäß wird die Aufgabe dadurch gelöst, daß an mindestens einem der Filterelemente mindestens ein Filterrechen befestigt ist, der mehrere Rechenzinken aufweist, die eine im filterungsaktiven Bereich bei geradliniger Aufwärtsbewegung der Filterelemente wirksame, vorzugsweise ebene Hebefläche ausbilden.

Während feinkörniges Filtergut von den Filterelementen selbst aus dem Kanal herausgefördert wird, können nunmehr Steine, Hölzer und dergleichen grobe Feststücke gleichzeitig und mechanisch abtransportiert werden, ohne daß die Arbeit der Förderband-Filtereinrichtung unterbrochen werden müßte. Auf diese Weise ist eine über lange Zeit ohne Eingriffe arbeitende Filterung sichergestellt, die keine besonderen Vorkehrungen oder eine zusätzliche Vorreinigung von groben Feststücken erfordert und deshalb universeller einsetzbar ist.

Die Längskanten der Filterelemente und die Filterrechen verlaufen zweckmäßig jeweils quer zu der Strömungsrichtung der zu filternden Flüssigkeit und etwa waagerecht, wobei die Förderband-Filtereinrichtung während des Betriebes so aufstellbar ist, daß eine die Achsen der Umlenkelemente verbindende Hauptachse um einen spitzen Förderwinkel zur Senkrechten geneigt ist, so daß das Rahmengestell tatsächlich während des Betriebes geneigt angeordnet ist und das Filtergut nicht während der Förderung von den Filterelementen abgleiten kann.

Unabhängig davon kann die Anordnung so getroffen sein, daß die Hebeflächen mit einer Normalen auf der Hauptachse einen Neigungswinkel zwischen 0° und 30° einschließen. Auf diese Weise kann man durch die Abstimmung des Neigungswinkels mit dem Förderwinkel dafür sorgen, daß die Hebeflächen stets so orientiert sind, daß aufliegendes Filtergut während der Förderung nicht abgespült werden oder herunterfallen kann.

Die Förderband-Filtereinrichtung ist einfach ausführbar, wenn die Rechenzinken während der Förderung der Strömungsrichtung der Flüssigkeit entgegengerichtet sind und sich so zwanglos dem restlichen Filterelement anpassen.

Als untere Umlenkelemente können glatte Umlenkrollen oder Kettenräder vorgesehen sein. In beiden Ausführungen ist es zweckmäßig, wenn die Umlenkelemente so ausgebildet sind, daß die geradlinigen Aufwärts- und Abwärtsbewegungen der Filterelemente parallel zueinander verlaufen.

Das Filterband aus den Filterelementen wird in einfacher Weise dadurch gebildet, daß an den Enden der Kettenglieder die Gelenklager für jeweils zwei parallele Gelenkachsen ausgebildet sind.

Die Filterelemente sind den hohen Belastungen durch auf den Hebeflächen aufliegende, gegebenenfalls sehr schwere Feststücke angepaßt, wenn an den Längskanten der Filterelemente Stirnflächen abgewinkelt sind, wenn darüberhinaus an den Filterelementen Seitenflächen abgewinkelt und die Stirnflächen mit den Seitenflächen fest verbunden sind, zweckmäßig so, daß die Stirnflächen und/oder Seitenflächen im Betrieb des Filterbandes in Richtung auf die Hauptachse weisen, so daß sie in Strömungsrichtung abgekantet verlaufen und das spätere Abfallen oder Abstreifen des Filtergutes von dem Filterband nicht behindern.

Eine stets geschlossene Fläche der Förderband-Filtereinrichtung läßt sich mit hoher Sicherheit dadurch realisieren, daß die Stirnflächen wenigsten in Teilen eben und an ihnen jeweils mit den Gelenkachsen fluchtende Stoßkanten ausgebildet sind in der Weise, daß zwei aneinanderstoßende Stirnflächen benachbarter Filterelemente an diesen Stoßkanten sowohl bei geradliniger Bewegung als auch bei der Umlenkung dieser Filterelemente beständig einen etwa konstant-geringen Abstand voneinander aufweisen, der das Filtergut in Strömungsrichtung nicht passieren läßt. Auf diese Weise erfolgt die Filterung nahezu vollständig, trotz der gelenkig verbundenen Filterelemente.

Im einzelnen ist es zu diesem Zweck noch günstig, wenn die Stoßkanten durch jeweils eine längskanten-parallele Abkantung der Stirnflächen gebildet werden, am besten, indem die durch die Abkantung einer Stirnfläche gebildeten Teilflächen einen stumpfen, vorzugsweise annähernd rechten Abkantwinkel einschließen, wobei die Stirnflächen und/oder die Seitenflächen vorteilhaft so ausgebildet sind, daß sie die flächigen Filterelemente zu räumlichen, zu der Hauptachse hin offenen Filterkörben ergänzen, die dabei einen dreieckigen, durch die Abkantungen gebrochenen Querschnitt aufweisen. Ein solcher Filterkorb ist außerordentlich formstabil und dabei trotzdem relativ leicht ausführbar. Um einen derartigen, etwa dreieckigen Querschnitt zu gewinnen, ist es zweckmäßig, wenn eine erste, gegenüber der anderen höhere Stirnfläche vorgesehen ist, an der oder in deren Nähe an dem Filterelement der Filterrechen vorgesehen ist. Die Krafteinleitung findet demgemäß im Bereich des größten Widerstandsmomentes statt.

Um eine Abdichtung der Filterrechen im Bereich der Sohle des Kanals zu gewährleisten, ist an dem Rahmengestell quer zu der Strömungsrichtung eine die Filterrechen abdichtende Abdichteinrichtung vorgesehen. Es können an ihr elastische Abstreifelemente vorgesehen sein, die in die Lücken zwischen den Rechenzinken des jeweiligen, durch die Abstreifeinrichtung bewegten Filterrechens eingreifen, beispielsweise in Form einer Bürste.

Wegen der oft enormen Breite der Förderband-Filtereinrichtung besteht die Gefahr, daß sich die breiten Filterelemente unter der Belastung aus den beladenen Filterrechen während der Förderung durchbiegen. Man kann dem Rechnung tragen, indem das gezogene Trumm des Filterbandes auf mindestens einer an dem Rahmengestell ortsfest gehalterten Unterlage gleitend aufliegend angeordnet ist, wobei die Unterlage vorteilhaft aus parallel zu der Förderrichtung der Filterelemente vorgesehenen Auflageschienen besteht. Die Anordnung wird insbesondere dadurch ermöglicht, daß sich an dem Rahmengestell beiderseits des Filterbandes Seitenwangen befinden. Die Unterlage kann auf waagerechten Quertraversen angebracht sein, die seitlich am Rahmengestell, insbesondere an dessen Seitenwangen, befestigt sind. Aber auch für die Filterelemente selbst sind gegebenenfalls Sicherungsvorkehrungen erforderlich, so daß sie auch hohe Lasten ohne Schaden auf die Unterlage übertragen können; deshalb kann es günstig sein, wenn an den Filterelementen diese versteifende Gleitstücke vorgesehen sind, die auf der Unterlage aufliegen.

Zur Reingiung des Filterbandes dient in erster Linie eine oberhalb desselben angeordnete rotierende Bürste. Die Reinigung des Filterbandes wird noch dadurch verbessert, wenn an dem oberen Gestellteil eine zweite Abstreifeinrichtung vorgesehen ist, die an den Filterelementen festhaftendes, nicht abgeworfenes Filtergut von dem Filterband entfernt, wobei als Abstreifelement wiederum eine Bürste vorgesehen sein kann.

Ein gleichförmiger Betrieb ist gewährleistet, wenn an jedem der Filterelemente je ein Filterrechen oder zumindest, wenn an einem Teil der Filterelemente, vorzugsweise in gleicher Teilung des Filterbandes, je ein Filterrechen vorgesehen ist. Die Anfertigung und der Zusammenbau werden erleichtert, wenn die Filterelemente nach Art, Umfang und Verteilung der Durchströmungsöffnungen an dem Filterband verschieden und alternierend vorgesehen sind und an gleichen Filterelementen jeweils ein Filterrechen vorgesehen ist.

Eine besonders voteilhafte Ausführung der Erfindung ist dadurch gekennzeichnet, daß die Stirnflächen der Filterelemente als filterungsaktive Teile ausbildet sind, so daß die Gesamtfläche der Filterelemente, die für die Ausfilterung zur Verfügung steht, wesentlich vergrößert ist.

Insgesamt erlaubt die erfindungsgemäße Förderband-Filtereinrichtung einen stetigen Betrieb, der nicht ständig durch behinderndes grobstückiges und nicht ausförderbares Filtergut unterbrochen wird; vielmehr wird die Anordnung nunmehr mit allen praktisch anfallenden Filteraufgaben fertig.

Die Erfindung wird nachstehend an Hand der Zeichnung an einem Ausführungsbeispiel näher erläutert. Es zeigen
- Fig. 1: eine Seitenansicht einer erfindungsgemäßen Förderband-Filtereinrichtung im Betrieb,
- Fig. 2: eine Einzelheit A aus Fig. 1,
- Fig. 3: ein Filterelement gemäß der Erfindung in Seitenansicht und
- Fig. 4: einen Schnitt B - B aus Fig. 3, sämtlich in schematisch vereinfachender Darstellung gezeichnet.

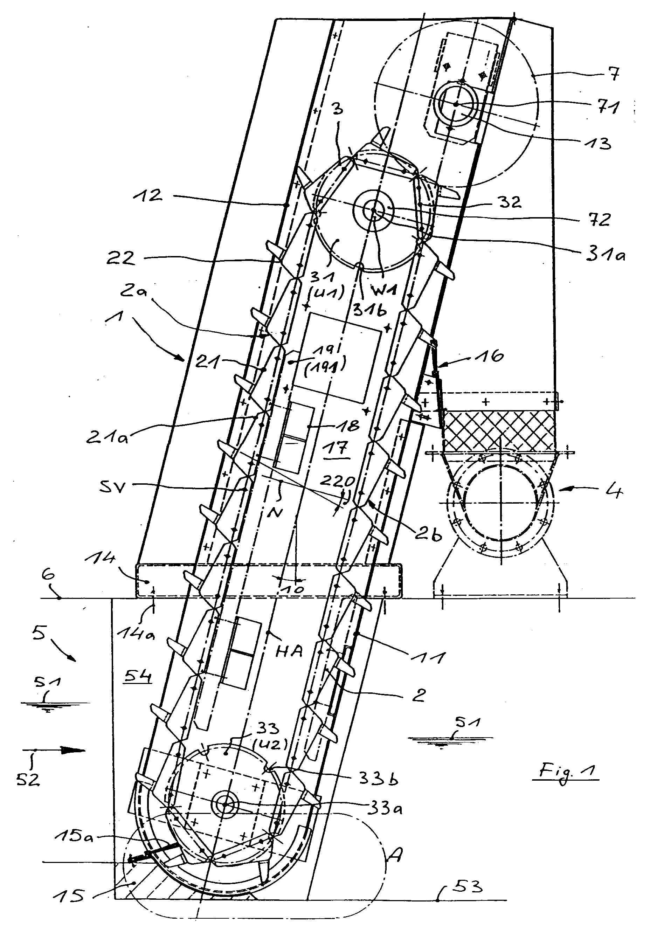

Entsprechend Fig. 1 besteht eine erfindungsgemäße Förderband-Filtereinrichtung im wesentlichen aus einem Rahmengestell 1, einem an dem Rahmengestell 1 geführten Filterband 2, einem mit dem Rahmengestell 1 und dem Filterband 2 verbundenen Kettentrieb 3 und einer Filtergut-Abförderung 4; sie ist zur Reinigung eines Kanales 5 vorgesehen, der sich unterhalb des Erdboden-Niveaus 6 erstreckt.

Der Kanal 5 wird von einer feststoffbeladenen Flüssigkeit 51 durchströmt in einer durch einen Richtungspfeil veranschaulichten Strömungsrichtung 52, wobei sich der Kanal 5 senkrecht zur Papierebene in einer erheblichen Breite erstrecken kann. Die Förderband-Filtereinrichtung reicht bis zu einer Sohle 53, so daß der gesamte Strömungsquerschnitt des Kanals 5 quer zu der Strömungsrichtung 52 so abgesperrt ist, daß die Flüssigkeit 51 den im Kanal 5 befindlichen Teil der Förderband-Filtereinrichtung passieren muß.

Das Rahmengestell 1 besteht aus einem unteren Gestellteil 11, das den von der Flüssigkeit 51 zu passierenden Teil bildet, und einem oberen Gestellteil 12, das sich außerhalb des Kanals 5 befindet und zur Lagerung eines elektromotorischen Antriebes dient, der auf der Welle W1 befestigt ist. Zwischen den Gestellteilen 11 und 12 ist ein Anschlußrahmen 14 vorgesehen, mit dessen Hilfe das Rahmengestell 1 beiderseits des Kanals 5 ortsfest arretiert ist, beispielsweise durch an den Seitenwänden 54 des Kanals 5 einbetonierte Ankerschrauben 14a. Die Gestellteile 11 und 12 sind an dem Anschlußrahmen 14 so angeschlossen, daß das Rahmengestell 1 um einen spitzen Förderwinkel 10 zur Senkrechten geneigt angeordnet ist, wenn das Erdboden-Niveau 6 etwa waagerecht verläuft. Der Förderwinkel 10 beträgt bevorzugt 15°, kann jedoch auch bis zu 30° ausgeführt sein. In der Zeichnung ist der Förderwinkel 10 unveränderbar dargestellt; es ist stattdessen aber auch möglich, das Rahmengestell 1 an dem Anschlußrahmen 14 verschwenkbar zu gestalten.

Von dem Antrieb werden Kettenräder 31 angetrieben, die ein erstes Umlenkelement U1 für eine Antriebskette 32 eines Kettentriebes 3 bilden und in seiner Achse 31a in dem Gestellteil 12 gelagert sind. Auf der zugehörigen Welle W1 sind beiderseits des Filterbandes 2 die ersten Umlenkelemente U1 vorgesehen, an denen jeweils eine Antriebskette 32 um 180° umgelenkt wird. In der Regel sind beide Umlenkelemente U1 als Kettenräder 31 ausgebildet, so daß beiderseits des Filterbandes 2 die Antriebsketten 32 synchron angetrieben werden.

In gleicher Weise sind an dem Gestellteil 11 zweite Umlenkelemente U2 auf einer ortsfest gelagerten Welle W2 vorgesehen. In der Zeichnung sind diese Umlenkelemente U2 ebenfalls als Kettenräder 33 ausgebildet, jedoch genügen hier unter Umständen auch einfache Umlenkrollen. Die Verbindung der Achse 33a der Kettenräder 33 mit der Achse 31a der Kettenräder 31 bildet eine Hauptachse HA der Förderband-Filtereinrichtung in dessen in der Fig. 1 gezeigten Seitenansicht.

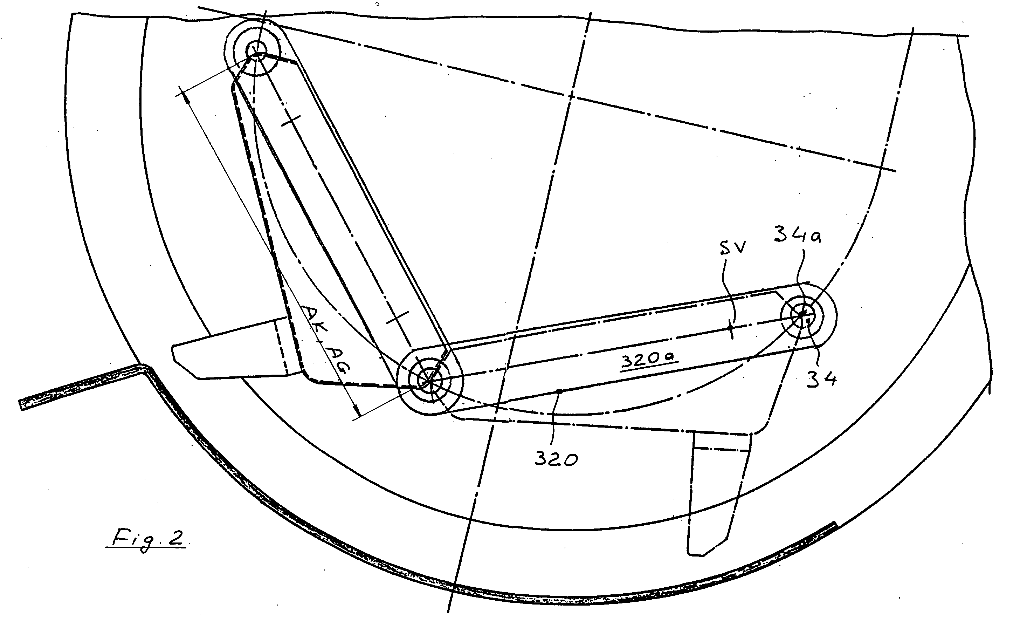

Beide Umlenkelemente U1,U2 sind in der Fig. 1 leicht als Kettenräder 31,33 zu identifizieren, da die erforderlichen, mit den Gelenkbolzen 34 (Fig. 2) der Antriebskette 32 zusammenwirkenden Gelenkpfannen 31b,33b gut zu erkennen sind. Ihre Achsabstände AK sind den Achsabständen AG der Gelenkbolzen 34 gleich. Hingegen sind die Kettenglieder 320 der Antriebskette 32 in der Fig. 1 nicht eingezeichnet, um die Übersichtlichkeit zu wahren; sie sind aber in der Fig. 2 ohne weiteres als einfache, zwischen den Gelenkbolzen 34 verlaufende Laschen zu erkennen.

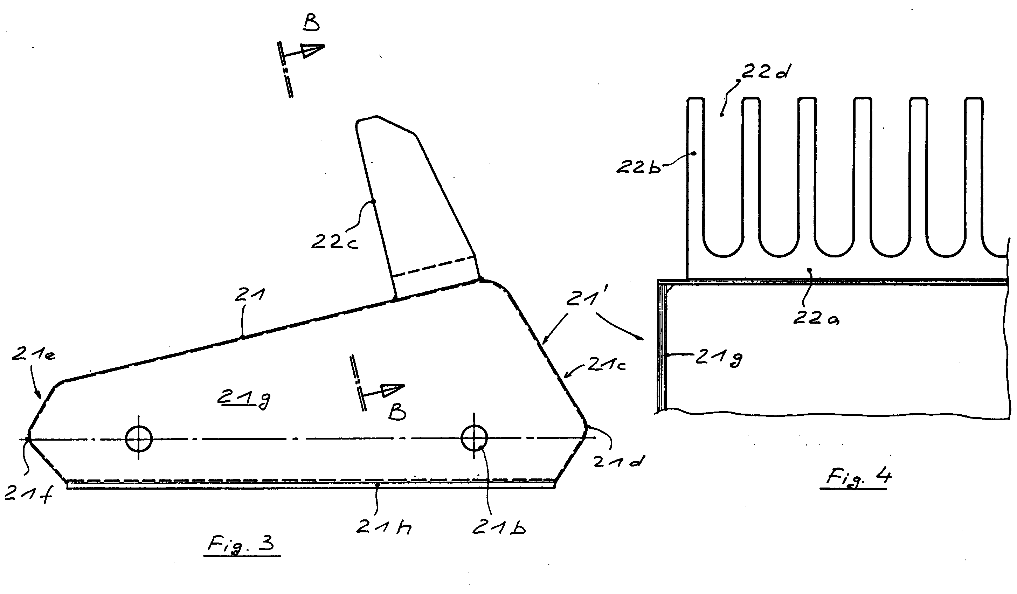

An jedem der Kettenglieder 320 ist auf deren "innerer" Seite 320a ein Filterelement 21 befestigt, das sich mit seinen waagerechten Längskanten im wesentlichen senkrecht zur Papierebene zwischen den das Filterband 2 seitlich einfassenden Antriebsketten 32 in ganzer Breite erstreckt. Zur Befestigung der Kettenglieder 320 mit den Filterelementen 21 sind jeweils zwei Schraubverbindungen SV vorgesehen, die in Fig. 1 und 2 angedeutet sind; in der Fig. 3 sind zugehörige Durchgangsbohrungen 21b eingezeichnet.

Die Filterelemente 21 sind im Querschnitt etwa dreieckig ausgebildet und jeweils durch Stirn- und Seitenflächen zu Filterkörben 21' ausgeformt, wobei die erforderlichen Filteröffnungen in den flächigen Filterelementen 21 vorgesehen sind. Eine erste, höhere Stirnfläche 21c (Fig. 3) ist aus dem Filterelement 21 abgekantet und durch eine sekundäre, versteifende Abkantung so ausgebildet, daß eine Stoßkante 21d entsteht. Ähnlich befindet sich in einer zweiten Stirnfläche 21e eine weitere Stoßkante 21f; beide Stoßkanten 21d,21f sind an den Filterkörben 21' so gelegen, daß sie sich in der Flucht der mit den Gelenkbolzen 34 verbundenen Gelenkachsen 34a befinden, geringfügig voneinander beabstandet. Damit ist sichergestellt, daß der so verbleibende schlitzförmige Abstand konstant bleibt, unabhängig von der relativen Verschwenkung zweier Filterelemente 21 gegeneinander. Die Seitenflächen 21g verdeutlichen den in groben Zügen dreieckigen Querschnitt der Filterkörbe 21'. Sie sind mit den anliegenden Stirnflächen 21c, 21e stoffschlüssig verbunden. Die Stirnflächen 21c, 21e sind als Filterflächen ausgeführt.

In der Fig. 1 besteht das Filterband 2 aus einer Vielzahl in der Zeichnung nicht unterscheidbarer, gleicher Filterelemente 21. Tatsächlich können aber verschiedene Filterelemente 21 vorgesehen sein, die sich insbesondere durch den Querschnitt und die Anordung und Anzahl der in ihnen befindlichen Filteröffnungen unterscheiden, wie oben bereits dargelegt worden ist. Ihr Querschnitt ist hier aber einheitlich ausgeführt.

An den Filterkörben 21' sind Filterrechen 22 befestigt, beispielsweise angeschweißt. Sie bestehen einstückig aus einer Leiste 22a und einer Vielzahl von Rechenzinken 22b, erstrecken sich in ganzer Breite des jeweiligen Filterkorbes 21' und sind auf dem Filterelement 21 auf der Seite der höheren Stirnfläche 21e vorgesehen; der Filterkorb 21' ist dabei so in das Filterband 2 eingefügt, daß sich diese Stirnfläche 21e am gezogenen Trumm 2a des Filterbandes 2 an dem Filterkorb 21' unten befindet und dabei von den Rechenzinken 22b eine der Aufnahme von groben Feststücken dienende Hebefläche 22c ausgebildet wird. Die über die Breite des Kanals 5 waagerechte Hebefläche 22c schließt mit einer in Fig. 1 eingezeichneten, auf der Hauptachse HA stehenden Normalen N einen Neigungswinkel 220 von 15° ein, so daß hier die Hebefläche 22c um 30° zur Waagerechten geneigt ist und Filtergut sicher gefördert werden kann.

Zum Abstreifen des aus der Flüssigkeit geförderten Rechengutes dient eine rotierende Bürste 7, die von einem an der Achse 71 befestigten Antrieb 13 angetrieben wird. Diese Bürste ist derart oberhalb des Filterbandes 2 angeordnet, daß die von der Bürste erfaßten Flächen beim Abstreifen jeweils eben liegen.

Eine zweite Abstreifeinrichtung 16 befindet sich, am Gestellteil 12 befestigt, am losen Trumm 2b zur Entfernung des noch an dem Filterband 2 anhaftenden Filtergutes in die Filtergut-Abförderung 4 für den Abtransport des Filtergutes.

Das Rahmengestell 1 ist parallel zu den Seitenwänden 54 des Kanals 5 mit Seitenwangen 17 versehen, an denen mehrere, durch den gesamten Kanal 5 geführte, waagerechte Quertraversen 18 angebracht sind. Die Quertraversen 18 dienen als Auflager für eine Unterlage 19, die aus einer Anzahl paralleler Auflageschienen 191 für die Filterkörbe 21' besteht, so daß sich diese auch bei großer Belastung nicht durchbiegen können. An den Filterkörben 21' im Bereich der Auflageschinen 191 können Gleitstücke 21h angebracht sein, um die Biegung und Flächenpressung zu vermindern.

### Aufstellung der Bezugszeichen

- 1: Rahmengestell
- 10: Förderwinkel
- 11: Gestellteil (unteres)
- 12: Gestellteil (oberes)
- 13: Antrieb
- 14: Anschlußrahmen
- 14a: Ankerschraube
- 15: Abdichteinrichtung
- 15a: Abdichtelement
- 16: Abstreifeinrichtung
- 17: Seitenwange
- 18: Quertraverse
- 19: Unterlage
- 191: Auflageschiene
- 2: Filterband
- 2a: Trumm
- 2b: Trumm
- 21: Filterelement
- 21': Filterkorb
- 21a: Längskante
- 21b: Durchgangsbohrung
- 21c: Stirnfläche
- 21d: Stoßkante
- 21e: Stirnfläche
- 21f: Stoßkante
- 21g: Seitenfläche
- 21h: Gleitstück
- 22: Filterrechen
- 220: Neigungswinkel
- 22a: Leiste
- 22b: Rechenzinken
- 22c: Hebefläche
- 22d: Lücke
- 3: Kettentrieb
- 31: Kettenrad
- 31a: Achse
- 31b: Gelenkpfanne
- 32: Antriebskette
- 320: Kettenglied
- 320a: Seite
- 33: Kettenrad
- 33a: Achse
- 33b: Gelenkpfanne
- 34: Gelenkbolzen
- 34a: Gelenkachse
- 4: Filtergut-Abförderung
- 5: Kanal
- 51: Flüssigkeit
- 52: Strömungsrichtung
- 53: Sohle
- 54: Seitenwand
- 6: Erdboden-Niveau
- 7: Bürste
- 71: Achse
- 72: Motor
- AG: Achsabstand (Gelenkbolzen)
- AK: Achsabstand (Gelenkpfanne)
- HA: Hauptachse
- N: Normale
- SV: Schraubverbindung
- U1,U2: Umlenkelement
- W1,W2: Welle

## Patentansprüche

1. Förderband-Filtereinrichtung zur mechanischen Reinigung einer in einem Kanal oder dergleichen strömenden, mit Feststoffen verunreinigten Flüssigkeit, insbesondere eines Abwassers, mit
(a) einem endlosen Filterband aus miteinander verbundenen, jeweils um eine waagerechte Gelenkachse gegeneinander gelenkigen, flächig-rechteckigen Filterelementen,
(b) je einem beiderseits des Filterbandes vorgesehenen, zu dessen Antrieb dienenden Kettentrieb aus jeweils mindestens einem Kettenrad und einer Vielzahl von Kettengliedern, die, jeweils um zwei voneinander beabstandete Umlenkelemente geführt und eine endlose Antriebskette bildend, beiderseits seitlich an den Filterelementen vorgesehen und an diesen befestigt sind,
(c) einem Rahmengestell für das Filterband, an dem die Umlenkelemente achsgelagert sind, wobei
(d) das Rahmengestell ein außerhalb des Kanals verbleibendes oberes Gestellteil aufweist, an dem mindestens ein Antriebsmotor befestigt ist, der mit mindestens einem der Kettenräder betriebsverbunden ist, und in dessen Bereich das Filtergut aus dem Feststoff-Filter herausgeführt und ausgeworfen wird, wobei ferner
(e) ein unteres in den Kanal einführbares Gestellteil vorgesehen ist, um das aus der Flüssigkeit auszuscheidende Filtergut aufzunehmen, und wobei
(f) die zur Filterung dienenden Flächen der Filterelemente im filterungsaktiven Bereich sich im wesentlichen etwa senkrecht zu der Strömungsrichtung der zu filternden Flüssigkeit erstrecken
dadurch gekennzeichnet, daß
an mindestens einem der Filterelemente (21) mindestens ein Filterrechen (22) befestigt ist, der mehrere Rechenzinken (22b) aufweist, die eine im filterungsaktiven Bereich bei geradliniger Aufwärtsbewegung der Filterelemente (21) wirksame, vorzugsweise ebene Hebefläche (22c) ausbilden.

2. Förderband-Filtereinrichtung nach Anspruch 1, dadurch gekennzeichnet, daß die Längskanten (21a) der Filterelemente (21) und die Filterrechen (22) jeweils quer zu der Strömungsrichtung (52) der zu filternden Flüssigkeit (51) und etwa waagerecht verlaufen.

3. Förderband-Filtereinrichtung nach Anspruch 1 und 2, dadurch gekennzeichnet, daß diese während des Betriebes so aufstellbar ist, daß eine die Achsen (31a,33a) der Umlenkelemente (U1,U2) verbindende Hauptachse (HA) um einen spitzen Förderwinkel (10) zur Senkrechten geneigt ist.

4. Förderband-Filtereinrichtung nach Anspruch 1 bis 3, dadurch gekennzeichnet, daß die Hebeflächen (22c) mit einer Normalen (N) auf der Hauptachse (HA) einen Neigungswinkel (220) zwischen 0° und 30° einschließen.

5. Förderband-Filtereinrichtung nach Anspruch 1 bis 3, dadurch gekennzeichnet, daß die Rechenzinken (22b) während der Förderung der Strömungsrichtung (52) der Flüssigkeit (51) entgegengerichtet sind.

6. Förderband-Filtereinrichtung nach einem der Ansprüche 1 bis 5, dadurch gekennzeichnet, daß als untere Umlenkelemente (U2) glatte Umlenkrollen vorgesehen sind.

7. Förderband-Filtereinrichtung nach einem der Ansprüche 1 bis 5, dadurch gekennzeichnet, daß als untere Umlenkelemente (U2) Kettenräder (33) vorgesehen sind.

8. Förderband-Filtereinrichtung nach einem der Ansprüche 6 oder 7, dadurch gekennzeichnet, daß die Umlenkelemente (U1,U2) so ausgebildet sind, daß die geradlinigen Aufwärts- und Abwärtsbewegungen der Filterelemente (21) parallel zueinander verlaufen.

9. Förderband-Filtereinrichtung nach einem der Ansprüche 1 bis 8, dadurch gekennzeichnet, daß an den Enden der Kettenglieder (320) die Gelenklager für jeweils zwei parallele Gelenkachsen (34a) ausgebildet sind.

10. Förderband-Filtereinrichtung nach einem der Ansprüche 1 bis 9, dadurch gekennzeichnet, daß an den Längskanten (21a) der Filterelemente (21) Stirnflächen (21c,21e) abgewinkelt sind.

11. Förderband-Filtereinrichtung nach Anspruch 10, dadurch gekennzeichnet, daß an den Filterelementen (21) Seitenflächen (21g) abgewinkelt sind.

12. Förderband-Filtereinrichtung nach Anspruch 10 und 11, dadurch gekennzeichnet, daß die Stirnflächen (21c,21e) mit den Seitenflächen (21g) fest verbunden sind.

13. Förderband-Filtereinrichtung nach Anspruch 12, dadurch gekennzeichnet, daß die Stirnflächen (21c,21e) und/oder Seitenflächen (21g) so abgewinkelt sind, daß sie im Betrieb des Filterbandes (2) in Richtung auf die Hauptachse (HA) weisen.

14. Förderband-Filtereinrichtung nach einem der Ansprüche 10 bis 13, dadurch gekennzeichnet, daß die Stirnflächen (21c,21e) wenigsten in Teilen eben und an ihnen jeweils mit den Gelenkachsen (34a) fluchtende Stoßkanten (21d,21f) ausgebildet sind in der Weise, daß zwei aneinanderstoßende Stirnflächen (21c,21e) benachbarter Filterelemente (21) an diesen Stoßkanten (21d,21f) sowohl bei geradliniger Bewegung als auch bei der Umlenkung dieser Filterelemente (21) beständig einen etwa konstant-geringen Abstand voneinander aufweisen, der das Filtergut in Strömungsrichtung (52) nicht passieren läßt.

15. Förderband-Filtereinrichtung nach Anspruch 14, dadurch gekennzeichnet, daß die Stoßkanten (21d,21f) durch jeweils eine längskanten-parallele Abkantung der Stirnflächen (21c,21e) gebildet werden.

16. Förderband-Filtereinrichtung nach Anspruch 15, dadurch gekennzeichnet, daß die durch die Abkantung einer Stirnfläche (21c,21e) gebildeten Teilflächen einen stumpfen, vorzugsweise annähernd rechten Abkantwinkel einschließen.

17. Förderband-Filtereinrichtung nach einem der Ansprüche 10 bis 16, dadurch gekennzeichnet, daß die Stirnflächen (21c,21e) und/oder die Seitenflächen (21g) so ausgebildet sind, daß sie die flächigen Filterelemente (21) zu räumlichen, zu der Hauptachse (HA) hin offenen Filterkörben (21') ergänzen, die dabei einen dreieckigen, durch die Abkantungen gebrochenen Querschnitt aufweisen.

18. Förderband-Filtereinrichtung nach Anspruch 17, dadurch gekennzeichnet, daß eine erste gegenüber der anderen höhere Stirnfläche (21c) vorgesehen ist, an der oder in deren Nähe an dem Filterelement (21) der Filterrechen (22) vorgesehen ist.

19. Förderband-Filtereinrichtung nach einem der Ansprüche 1 bis 18, dadurch gekennzeichnet, daß im Bereich der Sohle (53) des Kanals (5) an dem Rahmengestell (1) quer zu der Strömungsrichtung (52) eine erste die Filterrechen (22) säubernde Abdichteinrichtung (15) vorgesehen ist.

20. Förderband-Filtereinrichtung nach Anspruch 19, dadurch gekennzeichnet, daß die Abdichteinrichtung (15) mit Bürsten (15a) versehen ist.

21. Förderband-Filtereinrichtung nach Anspruch 20, dadurch gekennzeichnet, daß an der Abdichteinrichtung (15) elastische Abstreifelemente (15a) vorgesehen sind, die in die Lücken (22d) zwischen den Rechenzinken (22b) des jeweiligen, durch die Abstreifeinrichtung (15) bewegten Filterrechens (22) eingreifen.

22. Förderband-Filtereinrichtung nach einem der Ansprüche 1 bis 21, dadurch gekennzeichnet, daß das gezogene Trumm (2a) des Filterbandes (2) auf mindestens einer an dem Rahmengestell (1) ortsfest gehalterten Unterlage (19) gleitend aufliegend angeordnet ist.

23. Förderband-Filtereinrichtung nach Anspruch 22, dadurch gekennzeichnet, daß die Unterlage (19 aus parallel zu der Förderrichtung der Filterelemente (21) vorgesehenen Auflageschienen (191) besteht.

24. Förderband-Filtereinrichtung nach einem der Ansprüche 22 oder 23, dadurch gekennzeichnet, daß sich an dem Rahmengestell (1) beiderseits des Filterbandes (2) Seitenwangen (17) befinden.

25. Förderband-Filtereinrichtung nach einem der Ansprüche 22 bis 24, dadurch gekennzeichnet, daß die Unterlage (19) auf waagerechten Quertraversen (18) angebracht ist, die seitlich am Rahmengestell (1), insbesondere an dessen Seitenwangen (17), befestigt sind.

26. Förderband-Filtereinrichtung nach einem der Ansprüche 22 bis 25, dadurch gekennzeichnet, daß an den Filterelementen (21) diese versteifende Gleitstücke (21h) vorgesehen sind, die auf der Unterlage (19) aufliegen.

27. Förderband-Filtereinrichtung nach einem der Ansprüche 1 bis 26 , dadurch gekennzeichnet, daß im oberen Umlenkbereich des Filterbandes (2) ein rotierend antreibbares Abstreifelement (7) angeordnet ist.

28. Förderband-Filtereinrichtung nach einem der Ansprüche 1 bis 27, dadurch gekennzeichnet, daß das Abstreifelement (7) oberhalb des Kettenrades (31) angeordnet ist.

29. Förderband-Filtereinrichtung nach einem der Ansprüche 1 bis 28, dadurch gekennzeichnet, daß die Achse (71) des Abstreifelementes (7) seitlich in Drehrichtung zur Hauptachse (HA) versetzt angeordnet ist.

30. Förderband-Filtereinrichtung nach einem der Ansprüche 1 bis 29, dadurch gekennzeichnet, daß die Achse (71) relativ zur Achse (31a) einstellbar ist.

31. Förderband-Filtereinrichtung nach einem der Ansprüche 1 bis 30, dadurch gekennzeichnet, daß das Abstreifelement (7) eine Bürste ist.

32. Förderband-Filtereinrichtung nach einem der Ansprüche 1 bis 31, dadurch gekennzeichnet, daß an dem oberen Gestellteil (12) eine zweite Abstreifeinrichtung (16) vorgesehen ist, die an den Filterelementen (21) festhaftendes, nicht abgeworfenes Filtergut von dem Filterband (2) entfernt.

33. Förderband-Filtereinrichtung nach Anspruch 32, dadurch gekennzeichnet, daß als Abstreifelement (16) eine Bürste vorgesehen ist.

34. Förderband-Filtereinrichtung nach einem der Ansprüche 1 bis 33, dadurch gekennzeichnet, daß an jedem der Filterelemente (21) je ein Filterrechen (22) vorgesehen ist.

35. Förderband-Filtereinrichtung nach einem der Ansprüche 1 bis 33, dadurch gekennzeichnet, daß an einem Teil der Filterelemente (21), vorzugsweise in gleicher Teilung des Filterbandes (2), je ein Filterrechen (22) vorgesehen ist.

36. Förderband-Filtereinrichtung nach einem der Ansprüche 1 bis 33, dadurch gekennzeichnet, daß die Filterelemente (21) nach Art, Umfang und Verteilung der Durchströmungsöffnungen an dem Filterband (2) verschieden und alternierend vorgesehen sind und an gleichen Filterelementen (21) jeweils ein Filterrechen (22) vorgesehen ist.

37. Förderband-Filtereinrichtung nach einem der Ansprüche 10 bis 22, dadurch gekennzeichnet, daß die Stirnflächen (21c, 21e) als filterungsaktive Teile ausgebildet sind.
